# EUROPEAN PATENT SPECIFICATION

(11) **EP 1 060 872 B1**
(45) Date of publication and mention of the grant of the patent: **19.05.2004**
(21) Application number: 00305081.2
(22) Date of filing: 15.06.2000
(51) Int. Cl.: B29D 30/48

(54) **Manufacturing apparatus for single-wire bead**
Vorrichtung zur Herstellung von Einzeldraht-Wulstkernen für Reifen
Dispositif pour la fabrication de tringles à un seul fil pour talons pneumatiques

(30) Priority: 16.06.1999 JP 16964799
(43) Date of publication of application: 20.12.2000
(73) Proprietor: Sumitomo Rubber Industries Ltd., Kobe-shi, Hyogo-ken (JP)
(72) Inventor: Yasufuku, Takuya, c/o Sumitomo Rubber Ind. Ltd., Kobe-shi, Hyogo (JP); Takeuchi, Yuichi, c/o Sumitomo Rubber Ind. Ltd., Kobe-shi, Hyogo (JP)
(74) Representative: Manitz, Finsterwald & Partner

(56) References cited:
- EP-A- 0 433 918
- EP-A- 0 983 839
- US-A- 1 763 179
- US-A- 4 298 421
- US-A- 5 632 836

## Description

This inventions relates to a manufacturing apparatus for a single-wire bead according to the pre-characterising portion of claim 1.

A conventional bead manufacturing apparatus is provided with each of a bead winding device and an apex fitting device independently. A bare bead is made by the winding device, the bare bead is stored in a stock lane as intermediate stock, production size of the bead is drawn out of the stock lane, and a finished bead is made by the apex fitting device.

In the conventional bead manufacturing apparatus, however, production cost is high because space for the stock lane for stocking the bare bead is necessary. And, additional labour and time are required for handling of the beads between the winding device and the stock lane, and between the stock lane and the apex fitting device, and this causes inconvenience and cost. Further, defects in fitting of the apex are generated by decreased adhesiveness of the bare bead caused by the stock time.

An apparatus according to the pre-characterising portion of claim 1 is known from US-A-5,632,836. This known apparatus comprises at least one former, typically mounted on a turntable, and a number of stations. The formers are moved from station to station by indexing movement of the turntable.

It is therefore an object of the present invention to resolve these conventional problems and to provide a manufacturing apparatus for a single-wire bead in which a winding device, a thread winding device, and an apex fitting device are linked by a transferring device, and a finished bead is automatically and efficiently manufactured with one production line.

Accordingly in the present invention the object is solved by a manufacturing apparatus for a single-wire bead comprising the features of claim 1. Furthermore a detailed embodiment is described in the dependent claim 2.

The present invention will be described with reference to the accompanying drawings, in which:
Figure 1 is a first explanatory view showing a preferred embodiment of the present invention;
Figure 2 is a second explanatory view of the present invention;
Figure 3 is a third explanatory view of the present invention;
Figure 4 is a first explanatory view of a winding device;
Figure 5 is a second explanatory view of the winding device;
Figure 6 is a first explanatory view of a thread winding device;
Figure 7 is a second explanatory view of the thread winding device;
Figure 8 is a third explanatory view of the thread winding device;
Figure 9 is a fourth explanatory view of the thread winding device;
Figure 10 is a first explanatory view of an apex fitting device;
Figure 11 is a second explanatory view of the apex fitting device;
Figure 12 is a third explanatory view of the apex fitting device;
Figure 13 is a fourth explanatory view of the apex fitting device;
Figure 14 is a first explanatory view of a bead stock device;
Figure 15 is a second explanatory view of the bead stock device; and
Figure 16 is a third explanatory view of the bead stock device;

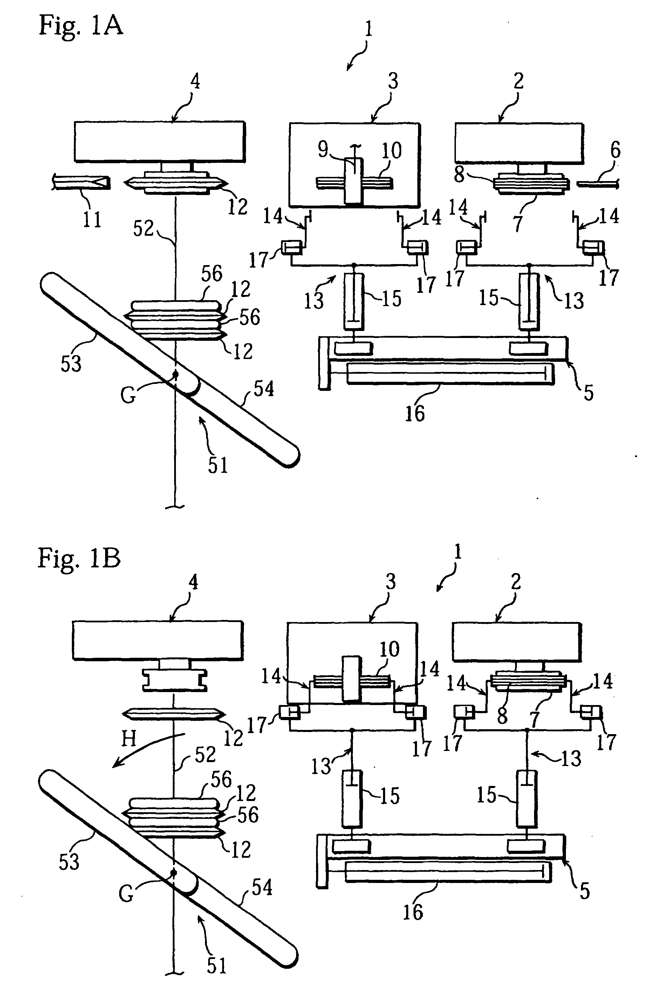

Figure 1 through Figure 3 show a manufacturing apparatus for a single-wire bead relating to the present invention. this apparatus 1 is provided with a winding device 2, a thread winding device 3, an apex fitting device 4, and a transferring device 5. Also it is preferable to provide a bead stock device 51.

The winding device 2 is a device for winding a (single) wire 6 around a drum 7 a plurality of times to form a shaped bead. The thread winding device 3 is a device for winding and tying off a thread 9 to prevent both ends of the wire 6 of the formed bead 8 from coming loose and falling off so as to form an intermediate bead 10. The apex fitting device 4 is a device for fitting an apex 11 to the intermediate bead 10 to form a finished bead 12. Finally, the bead stock device 51 is a device for stocking the finished bead 12. The winding device 2, the thread winding device 3, and the apex fitting device 4 are disposed serially with the same spacings or intervals between each. The bead stock device 51 is disposed at a position in front of the apex fitting device 4 so it may collect the finished beads 12.

The formed bead 8 is defined as the assembly when the wire 6 is wound around the drum 7 to form a core, the intermediate bead 10 is defined as when the thread 9 is wrapped around the formed bead 8 to lock the wire ends, and the finished bead 12 is defined as that when the apex 11 is attached to the intermediate bead 10.

The transferring device 5 is provided with a pair of transferring portions 13 each of which is disposed in a position facing the winding device 2 and a position facing the thread winding device 3, or a position facing the thread winding device 3 and a position facing the apex fitting device 4 respectively on an upstream side and a downstream side so as to be parallel.

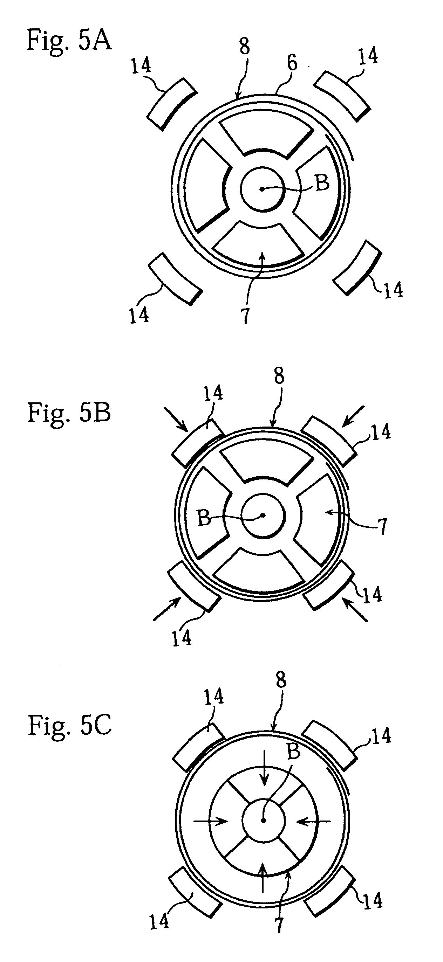

The transferring portions 13 is provided with plural (4 in the present invention as shown in Figure 5) contact portions 14 which can be freely closed to and opened from a bead 8 and a bead 10 to hold the beads 8 and 10.

The transferring device 5 reciprocates between a first position and a second position, taking the formed bead 8 from the winding device 2 and the intermediate bead 10 out of the thread winding device 3 in the first position, and transfers the formed bead 8 to the thread winding device 3 and the intermediate bead 10 to the apex fitting device 4 in the second position.

To describe concretely, as shown in Figure 1, each of the transferring portions 13 is in a position facing the winding device 2 and a position facing the thread winding device 3 respectively in the first position. The transferring portion 13 on the upstream side can be closed to and parted from the winding device 2, and the transferring portion 13 on the downstream side is closed to and parted from the thread winding device 3 by actuating cylinders 15 of the transferring portions 13.

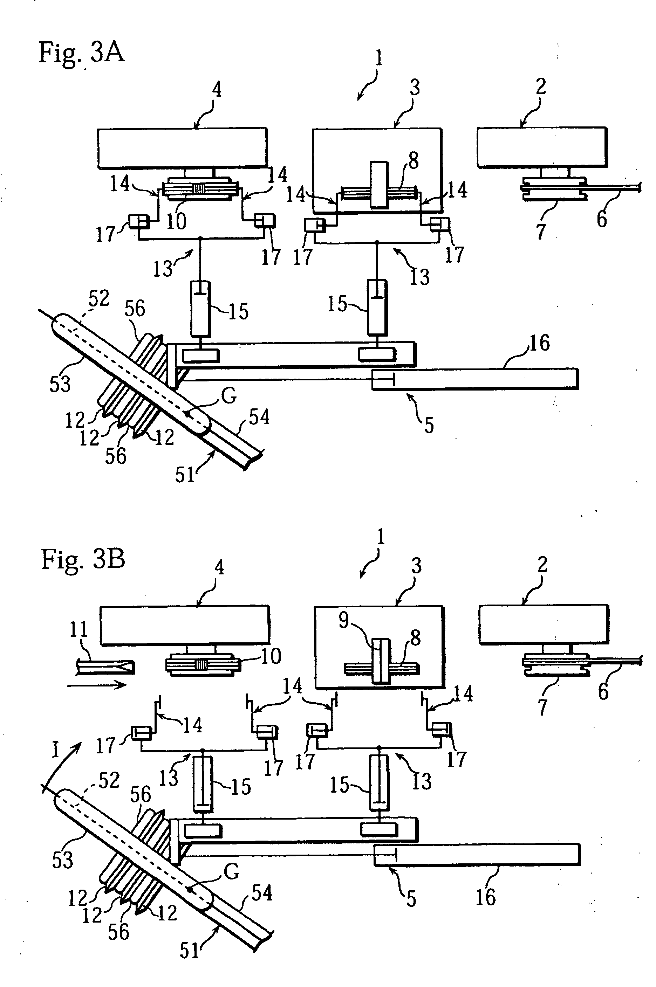

Further, as shown in Figure 3, each of the transferring portions 13 is in a position facing the thread winding device 3 and a position facing the apex fitting device 4 respectively in the first position when the transferring portions 13 on the upstream side can be closed to and parted from the thread winding device 3, and the transferring portion 13 on the downstream side can be closed to and parted from the apex fitting device 4 by the actuating cylinders 15 of the transferring portions 13.

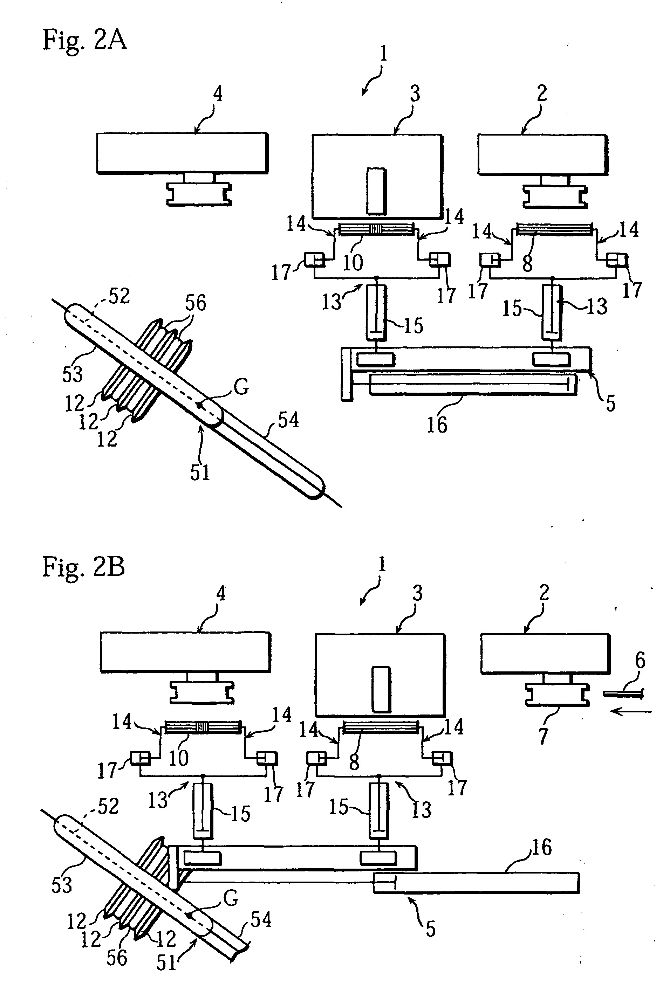

Again, as shown in Figure 2, the transferring device 5 is constructed as to be reciprocatable between the first position and the second position by an actuating cylinder 16.

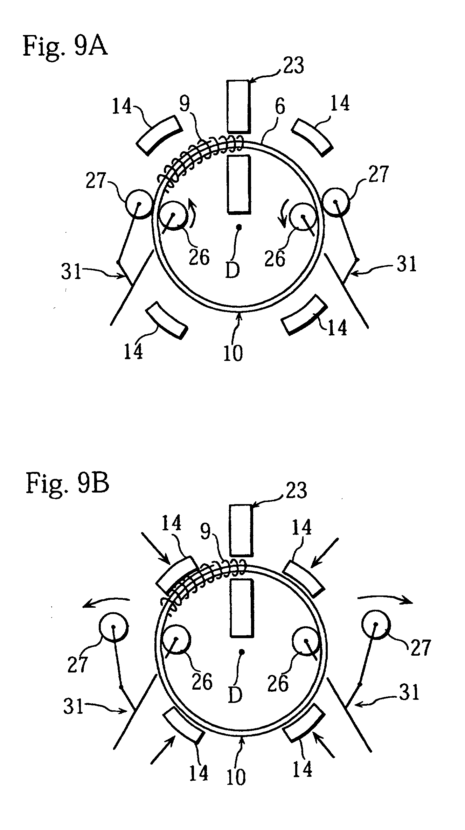

The contact portions 14 are closed to and parted from the bead 8 and the bead 10 by a cylinder 17. As shown in Figure 5, the contact portions 14 are disposed around the circumference of the formed bead 8 (the intermediate bead 10 in Figure 9) as to surround the formed bead 8 (the intermediate bead 10 in Figure 9). Therefore, the plural contact portions 14 can contract and expand to hold and release the bead 8 and the bead 10.

Next, the production of a bead in the apparatus 1 is described. In the present invention, a single-wire bead is made and the working time of the winding device and the apex fitting device 4 in the production machine are be synchronised with a ratio of 1 : 1 which is possible because (different from a conventional tape bead) the bead is formed by winding a single wire around a drum for plural times.

As shown in Figure 1A, the formed bead 8 is formed by the winding device 2, the intermediate bead 10 is formed by the thread winding device 3, and the finished bead 12 is formed by the apex fitting device 4. The transferring device 5 is on the first position, and each of the transferring portions 13 are parted from the winding device 2 and the thread winding device 3. And, the contact portions 14 are expanded.

Then as shown in Figure 1B, each of the transferring portions 13 closes to the winding device 2 and the thread winding device 3 respectively, the contact portions 14 are contracted to hold the bead 8 and the bead 10. At the same time the finished bead 12 is sent out of the apex fitting device 4 to a stock portion 52 of the bead stock device 51. Then the stock portion 52 turns in the direction of arrow H around axis G, and the finished bead 12 approaches a spacer supplying portion 53.

Then, as shown in Figure 2A, the transferring portions 13, holding the bead 8 and the bead 10, part from, the winding device 2 and the thread winding device 3 respectively, take the bead 8 out of the device 2 and the bead 10 out of the device 3, and the transferring device 5 is moved to the second position by the cylinder 16 as shown in Figure 2B. Immediately the winding device 2 starts winding wire around the drum 7.

As shown in Figure 3A, the contact portions 14 expand and release the bead 8 and the bead 10, and the transferring portions 13 part from the thread winding device 3 and the apex fitting device 4 respectively. The thread winding device 3 starts winding the thread 9 around the formed bead 8, and the apex fitting device 4 starts fitting the apex 11 to the intermediate bead 10 whilst the winding device 2 is winding the wire 6 around the drum 7 for the next bead.

The transferring device 5 is (as shown in Figure 1A0 moved to the first position by the cylinder 16, and the stock portion 52 turns in the direction of arrow 1 around the axis G and proceeds to the position where the finished bead 12 is sent out. The bead 8 and the bead 10 are transferred and the finished bead 12 is made repeatedly.

Next, the devices 2, 3, 4 and 15 are described in detail. First, the winding device 2 is described.

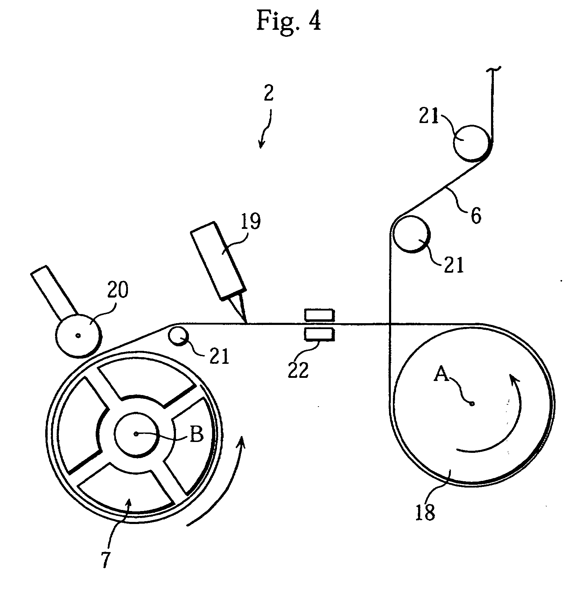

The winding device 2, as shown in Figure 4, is provided with a drum 7 composed of a four-piece former, a driving roller 18, a cutter 19, a presser roller 20, plural guiding rollers 21, and a chuck portion 22.

The wire 6 is fed to the drum 7 attached so as to rotate around an axis B by the driving roller 18 attached as to rotate around an axis A. It is pressed to the drum 7 by the presser roller 20, and wound around the drum 7, the wire 6 being guided certainly by the guiding rollers 21.

After the winding of the wire 6 around the drum 7 for the required number of times, the wire 6 is held by the chuck 22, cut by the cutter 19, and the formed bead 8 is thus formed as shown in Figure 5. Both ends of the wire 6 are in the same position in the circumferential direction of the formed bead 8.

Next, the formed bead 8 is taken out (refer to Figure 1). As shown in Figure 5A, the expanded contact portions 14 are positioned outside and on the circumference of the formed bead 8, and the contact portions 14 contract and hold the formed bead 8 as shown in Figure 5B, and, as shown in Figure 5C, the formed bead 8 is held and taken out by the contract portions 14 when the drum 7 contracts toward the axis B. Then, the drum 7 re-expands to its predetermined diameter, and the next bead 8 is formed (refer to Figure 4).

In this case, the drum 7 is composed of a four-piece former which expands and contracts in directions at right angles with the axis B.

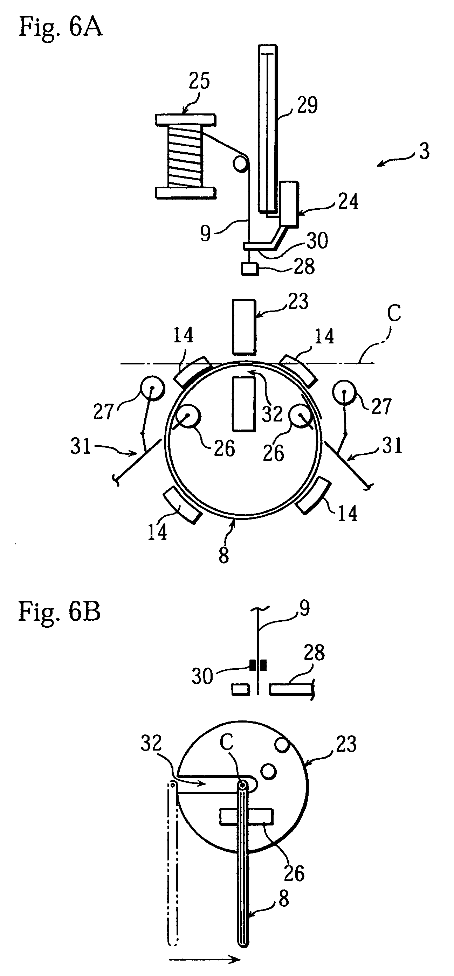

Next, the thread winding device 3 is described in detail. As shown in Figure 6, the thread winding device 3 is provided with a discoid rotating thread winding portion 23, a guiding portion 24, a thread portion 25, a fixing and cutting portion 28, and roller portions 31.

The rotating thread winding portion 23 is attached so as to freely rotate around an axis C, and is provided with a notched groove portion 32 toward the centre portion (the axis C). The roller portion 31, having a driving roller 26 and a presser roller 27, is disposed on both sides of the rotating thread winding portion 23 in a direction of the axis C. The presser roller 27 is attached so it may close to and part from the driving roller 26.

The formed bead 8 is transferred as described below (refer to Figure 3). The formed bead 8 held by the contact portions 14 is guided to the centre portion of the rotating thread winding portion 23 through the notched groove portion 32, and held by the driving rollers 26 from inside of the circumference of the formed bead 8 in a position corresponding to the centre portion (axis C). The thread 9 is drawn from the thread portion 25 and is held by a holding portion 20 of the guiding portion 24. This can be guided toward near to the centre portion of the rotating thread winding portion 23 by a cylinder 29.

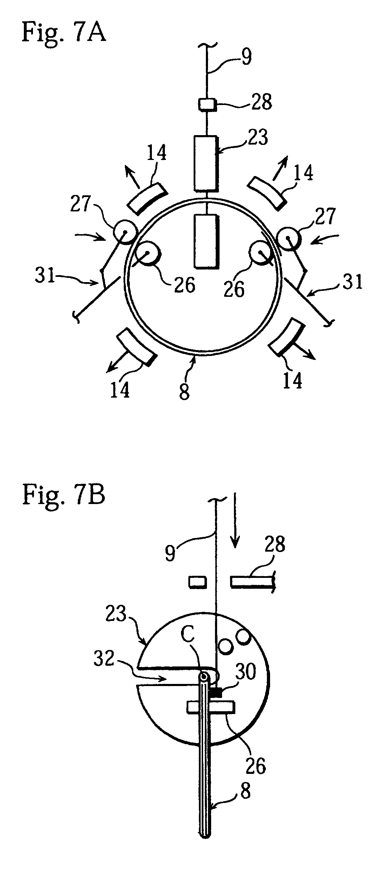

As shown in Figure 7, the presser roller 27 comes close to the driving roller 26, the formed bead 8 is held by the presser roller 27 and the driving roller 26, and the contact portions 14 expand and release the formed bead 8 to finish the transfer. Then the thread 9 is led near to the centre portion inside the rotating thread winding portion 23.

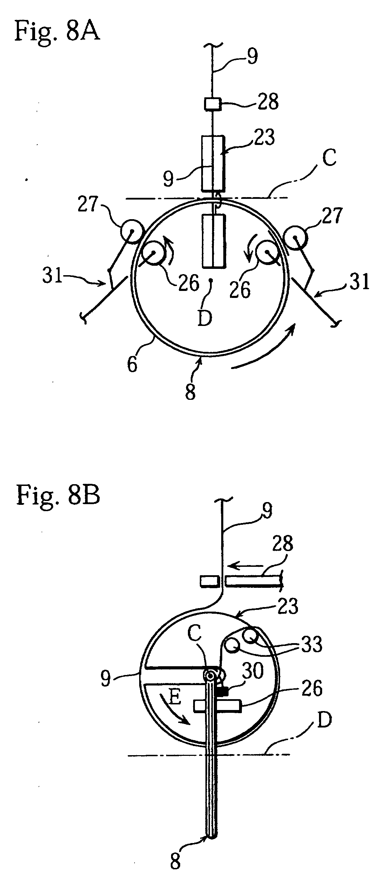

As shown in Figure 8, he formed bead 8 is rotated around an axis D by rotation of the driving rollers 26. The formed bead is rotated to a predetermined position because the part including both ends of the wire 6 is wound with a thread.

Then, the thread is wound on the formed bead 8 by the rotating thread winding portion 23 rotating around axis C in the direction of arrow E. To describe concretely, the end portion of the thread 9 inside the rotating thread winding portion 23 is fixed by the holding portion 30, the thread 9 is guided and wound around the formed bead 8 (he axis C) by plural guiding portions 33 inside the rotating thread winding portion 23 when the rotating thread winding portion 23 rotates. Further, in this case, the thread 9 is also guided onto the periphery of the rotating thread winding portion 23, and fixed and cut by the fixing and cutting portion 28 after the required length of the thread 9 is wound.

When the rotating thread winding portion 23 is rotating around the axis C, the formed bead 8 rotates around the axis D until the part including both ends of the wire 6 is wound with thread as shown in Figure 9A, and the intermediate bead 10, in which the both ends of the wire 6 are fixed, is formed thereby. Then, the intermediate bead 10 is taken out. That is to say, as shown in Figure 9B, the contact portions 14 hold the intermediate bead 10, the presser rollers 27 part from the driving rollers 26, and the intermediate bead 10 is taken out.

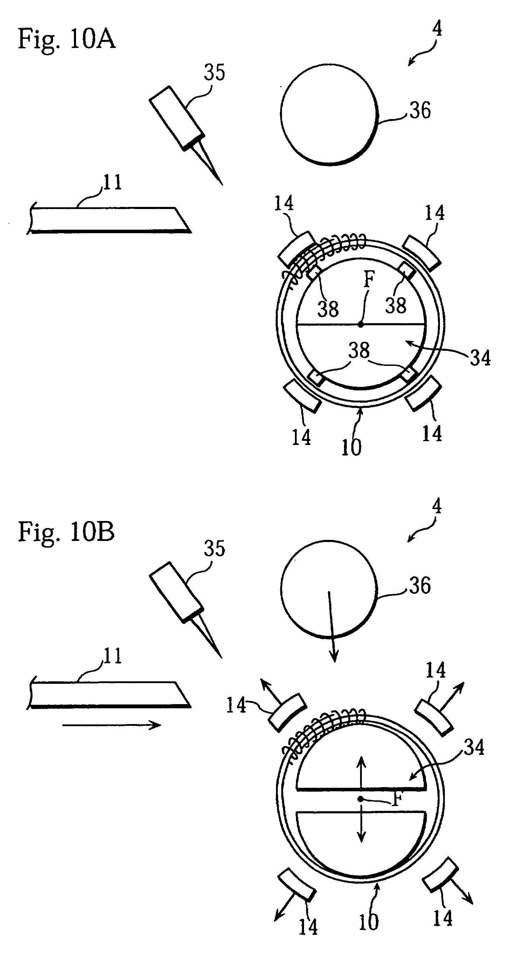

Next, the apex fitting device 4 is described in detail, as shown in Figure 10. The apex fitting device 4 has a drum 34 composed of a two-piece former, a cutting portion 35, and a presser roller 36.

The drum 34, attached so as to be rotatable around an axis F, is composed of a two-piece former which can be expanded and contracted in a direction at right angles with the axis F. The drum 34 has plural (4 in the present invention) built-in release pins 38 which protrude when the drum 34 contracts.

Again, as shown in Figure 10A, the intermediate bead 10 held by the contact portions 14 is fed into the apex fitting device 4 so as to surround the contracted drum 34, and, as shown in Figure 10B, the drum 34 expands the contract portions release the intermediate bead 10, and the drum 34 holds the intermediate bead 10.

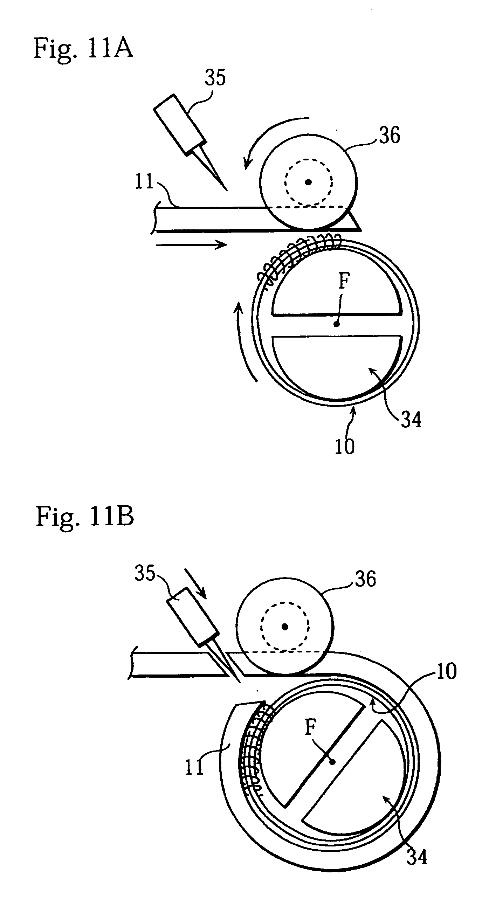

Then, as shown in Figure 11A, the apex 11 is sent out onto the intermediate bead 10, pressed onto the intermediate bead 10 by the presser roller 36, and fitted to the intermediate bead 10 by rotation of the drum 34 in a direction of an arrow indicated above the presser roller 36. As shown in Figure 11B, the apex 11 is cut by the cutting portion 35 to a predetermined length (the length of the periphery of the intermediate bead 10). Although the cross-sectional configuration of the apex 11 is triangular in the present invention, other apex shapes such as circular cross-sectional configuration can be fitted by changing the presser roller 36.

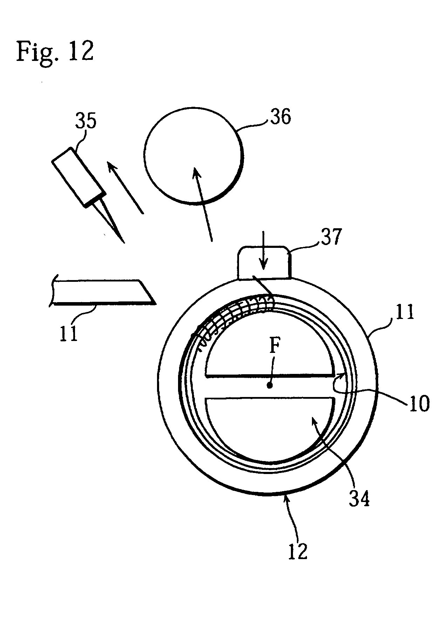

As shown in Figure 12, the presser roller 36 parts from the fitted apex 11, a pressing portion 37 presses downward both ends of the apex 11 to connect the ends, and the finished bead 12 is formed thereby.

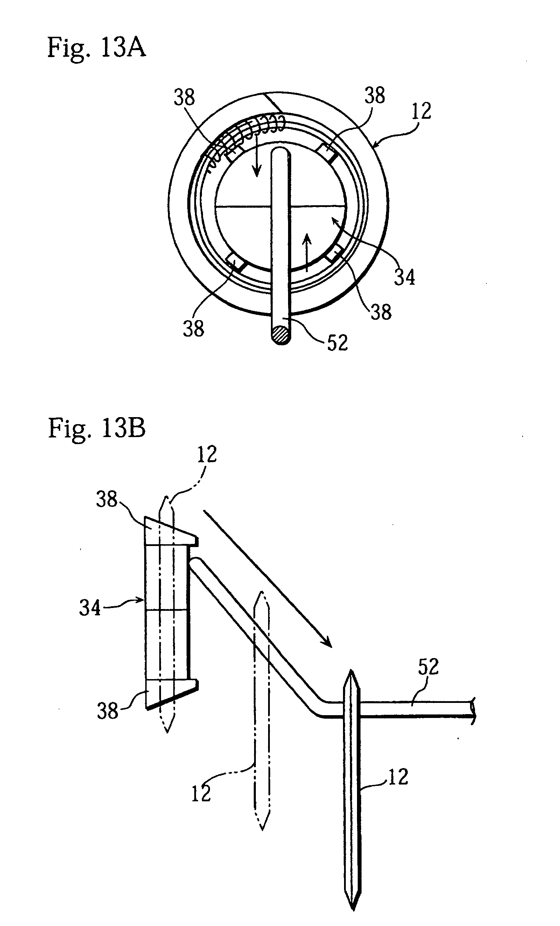

Then, as shown in Figure 13A, the stock portion 52 of the bead stock device 51 (refer to Figure 1) is situated in front of the drum 34, the drum 34 contracts, and the release pins 38 become protruding, and, as shown in Figure 13B, the finished bead 12, sliding on inclinations on the release pins 38, is released from the drum 34 to the stock portion 52.

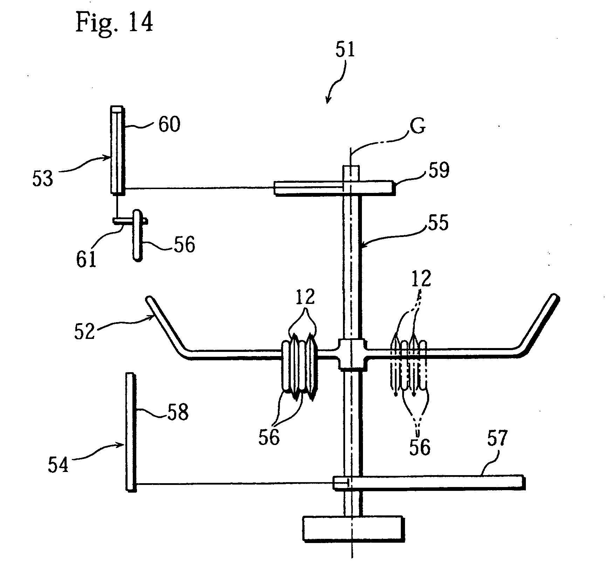

Next, the bead stock device 51 is described in detail. As shown in Figure 14, the bead stock device 51 is provided with a spacer supplying portion 53 fixed to an upper portion of a vertical pole 55, a stock portion 52 attached to a middle portion of the pole 55 as to rotate around the pole 55 (an axis G), and a pushing portion 54 fixed to a lower portion of the pole 55. Also a middle part of the stock portion 52 is attached to the pole 55 and both ends of the stock portion 52 incline upward.

The spacer supplying portion 53 and the pushing portion 54 are disposed on positions not interfering with the transferring device 5 as shown in Figure 1 through Figure 3. The stock portion 52, rotating around the axis G, receives the finished bead 12 from the apex fitting device 4, is supplied with a spacer 56 by the spacer supplying portion 53, and the finished bead 12 and the spacer 56 are pressed to the middle part of the stock portion 52 by the pushing portion 54.

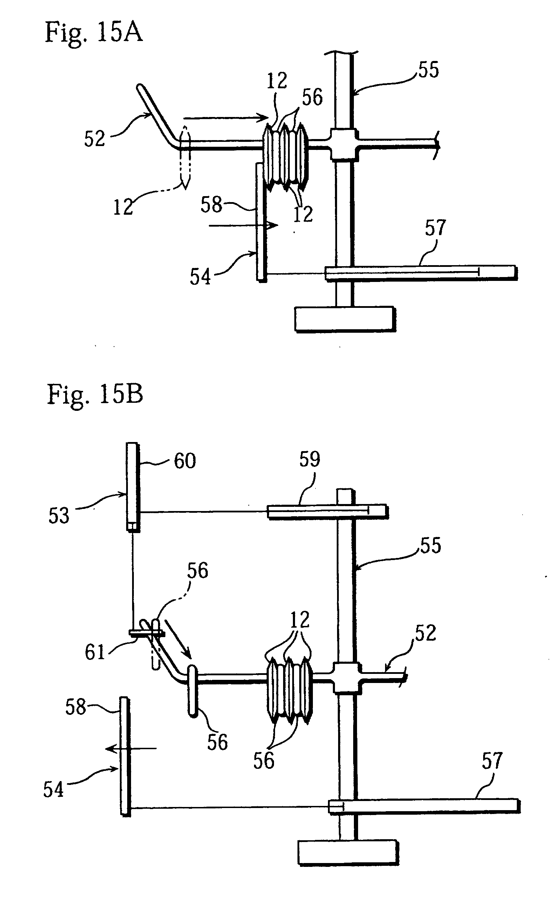

To describe concretely, the stock portion 52, receives the finished bead 12 as shown in Figure 13B, rotates to a position corresponding to the spacer supplying portion 53 and the pushing portion 54 as shown in Figure 2A. A contact portion 58 of the pushing portion 54, closed to the pole 55 by a cylinder 57, pushes the finished bead 12 to the pole 55 as shown in Figure 15A. Then, as shown in Figure 15B, the contact portion 58 parts from the pole 55, a provided hitching portion 61 of the spacer supplying portion 53 is closed to an end of the stock portion 52, and the spacer 56 hitches to the hitching portion 61 is transferred to the stock portion 52.

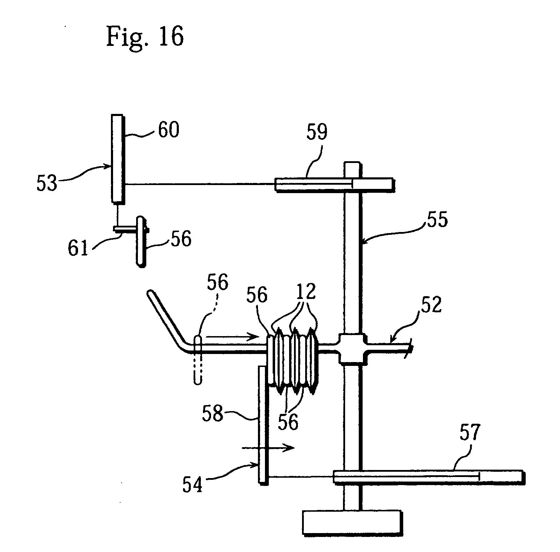

As shown in Figure 16, the hitching portion 61 parts from the stock portion 52, hitches a new spacer 56 and waits. The contact portion 58 approaches the pole 55 and pushes the spacer 56 transferred to the stock portion 52 to the pole 55.

Then, as shown in Figure 1, the stock portion turns around the axis G, and receives the next finished bead 12 from the apex fitting device 4.

As described above, the finished beads 12 and the spacers 56 are stocked on the stock portion 52 one after the other, and the spacers 56 prevent the finished beads 12 from sticking to each other.

Stocking is efficient because the finished beads 12 and the spacers 56 are stocked on both sides of the pole 55 on the stock portion 52.

The present invention, is not restricted just to the embodiments above. For example, the transferring portion 13 on the upstream side and the transferring portion 13 on the downstream side may move independently to shorten further the production time of the bead. The number of contact portion 14 may be increased to conduct the take out and transfer more certainly. That is to say, the design can be modified within the general scope of the present invention.

According to the manufacturing apparatus for single-wire bead of the present invention, conventional problems, such as having an intermediate stock lane, the handling of the bead between the devices, generation of defective product, are solved. The finished bead 12 is made efficiently in one production line. Further, only the required amount of the product can be made, and improved productivity and cost reduction can be obtained.

The finished beads 12 can be stocked efficiently and automatically for the bead stock device 51, and productivity and cost reduction is obtained.

## Claims

1. A manufacturing apparatus for a single-wire bead comprising: a winding device (2) which forms a formed bead (8) by winding a wire (6) on to a drum (7), an apex fitting device (4) which forms a finished bead (12) by fitting an apex (11) to an intermediate bead (10), and a transferring device (5), **characterised in that**: there is provided a thread winding device (3) which forms said intermediate bead (10) by winding and fixing thread (9) to hold both ends of the wire (6) on the circumference of the formed bead (8), and said transferring device (5) is reciprocatable between a first position and a second position, whereby said transferring device (5) takes the formed bead (8) out of the winding device (2) and the intermediate bead (10) of the thread winding device (3) on the first position, and transfers the formed bead (8) to the thread winding device (3) and the intermediate bead (10) to the apex fitting device (4) on the second position.

2. A manufacturing apparatus for single-wire bead as set forth in claim 1, **characterised in that** a bead stock device (51), which stocks the finished bead (12) released from the apex fitting device (4), is provided.

## Patentansprüche

1. Herstellungsvorrichtung für einen Einzeldrahtwulst, umfassend:
eine Wickeleinrichtung (2), die einen geformten Wulst (8) bildet, indem ein Draht (6) auf eine Trommel (7) gewickelt wird, eine Kernreiterbefestigungseinrichtung (4), die einen fertigen Wulst (12) bildet, indem ein Kernreiter (11) an einem Zwischenwulst (10) befestigt wird, und eine Überführungseinrichtung (5), **dadurch gekennzeichnet, dass** eine Fadenwickeleinrichtung (3) vorgesehen ist, die den Zwischenwulst (10) bildet, indem ein Faden (9) derart gewickelt und befestigt wird, dass beide Enden des Drahtes (6) an dem Umfang des geformten Wulstes (8) gehalten sind, und dass die Überführungseinrichtung (5) zwischen einer ersten Stellung und einer zweiten Stellung hin- und herbewegbar ist, wobei die Überführungseinrichtung (5) in der ersten Stellung den geformten Wulst (8) von der Wickeleinrichtung (2) und den Zwischenwulst (10) von der Fadenwickeleinrichtung (3) entnimmt, und in der zweiten Stellung den geformten Wulst (8) zu der Fadenwickeleinrichtung (3) und den Zwischenwulst (10) zu der Kernreiterbefestigungseinrichtung (4) überführt.

2. Herstellungsvorrichtung für einen Einzeldrahtwulst nach Anspruch 1, **dadurch gekennzeichnet, dass** eine Wulstbevorratungseinrichtung (51) vorgesehen ist, die den fertigen Wulst (12), der von der Kernreiterbefestigungseinrichtung (4) freigegeben wird, bevorratet.

## Revendications

1. Appareil de fabrication d'un talon à un seul câble, comprenant un dispositif d'enroulement (2) qui forme un talon conformé (8) par enroulement d'un câble (6) sur un tambour (7), un dispositif (4) de montage de pointe de bourrage de talon qui forme un talon terminé (12) par montage d'une pointe de bourrage (11) sur un talon intermédiaire (10), et un dispositif de transfert (5), **caractérisé en ce qu'**il comporte un dispositif (3) d'enroulement de fil qui forme le talon intermédiaire (10) par enroulement et fixation d'un fil (9) afin que les deux extrémités du câble (6) soient tenues à la circonférence du talon conformé (8), et le dispositif de transfert (5) est mobile en translation entre une première position et une seconde position tel que le dispositif de transfert (5) retire le talon conformé (8) du dispositif d'enroulement (2) et le talon intermédiaire (10) du dispositif d'enroulement de fil (3) dans la première position et transfère le talon conformé (8) au dispositif d'enroulement de fil (3) et le talon intermédiaire (10) au dispositif de montage de pointe de bourrage (4) à la seconde position.

2. Appareil de fabrication pour talon à un seul câble tel qu'indiqué dans la revendication 1, **caractérisé en ce qu'**un dispositif (51) de stockage de talon, qui stocke le talon terminé (12) libéré du dispositif (4) de montage de pointe de bourrage, est incorporé.
